Europäisches Patentamt

European Patent Office

Office européen des brevets

(11) Veröffentlichungsnummer: **0 271 678 B1**

# EUROPÄISCHE PATENTSCHRIFT

(45) Veröffentlichungstag der Patentschrift: **22.01.92**

(51) Int. Cl.⁵: **H02K 11/00**, H02H 7/06

(21) Anmeldenummer: **87115649.3**

(22) Anmeldetag: **24.10.87**

(54) **Anordnung zum Reduzieren der Wellenspannungen an dynamoelektrischen Maschinen.**

(30) Priorität: **19.11.86 CH 4620/86**

(43) Veröffentlichungstag der Anmeldung:
**22.06.88 Patentblatt 88/25**

(45) Bekanntmachung des Hinweises auf die
Patenterteilung:
**22.01.92 Patentblatt 92/04**

(84) Benannte Vertragsstaaten:
**CH DE FR GB IT LI SE**

(56) Entgegenhaltungen:
**DE-A- 2 034 883**
**DE-A- 3 511 755**
**GB-A- 1 508 793**
**US-A- 4 535 377**

(73) Patentinhaber: **BBC Brown Boveri Aktiengesellschaft**

**CH-5401 Baden(CH)**

(72) Erfinder: **Posedel, Zlatimir**
**Hardstrasse 78**
**CH-5432 Neuenhof(CH)**

**Beschreibung**

Technisches Gebiet

Die Erfindung bezieht sich auf eine Anordnung zum Reduzieren der Wellenspannungen an dynamoelektrischen Maschinen, insbesondere Turbogruppen, bei welcher am nichtantriebsseitigen Wellenende der Maschine, deren Welle durch Isolierstrecken gegen Erde, Masse und Fundament galvanisch getrennt ist, ein Strompfad, umfassend eine Kontaktvorrichtung und eine hierzu in Serie geschaltete Kapazität zwischen Welle und Maschinenmasse bzw. Erde vorgesehen ist.

Eine Anordnung zum Reduzieren von Wellenspannungen mit diesen Merkmalen ist beispielsweise aus der DE-OS 35 11 755 bekannt.

Technologischer Hintergrund

Die an elektrischen Maschinen, insbesondere Turbogruppen, auftretenden Wellenspannungen sind eine potentielle Gefahr für zahlreiche Komponenten des Wellenstranges. Wenn sich unkontrollierte Stromkreise ausbilden, können die in diesen Pfaden liegenden Teile durch Stromeinwirkung und Funkenerosion geschädigt werden. Durch zwei allgemein bekannte Massnahmen konnten die Schadenfolgen der Wellenspannungen einwandfrei ausgeschaltet werden:

- Durch Einfügen von Isolierstrecken wurden Barrieren geschaffen, so dass die Wellen-Längsspannungen keine Schadströme über die gefährdeten Teile treiben können. In der Regel werden diese Isolierstrecken, insbesondere bei Turbogruppen, nur auf der Nichtantriebsseite (NS) der elektrischen Maschine (Generator) ausgeführt. Eine konsequente Isolation aller poteniell gefährdeten Teile einer Dampfturbine bzw. jener von Arbeitsmaschinen bei Antrieb durch Motoren wäre kaum durchführbar.
- Durch Erdung der Welle auf der nichtisolierten Antriebsseite (AS) über Erdungsbürsten, so dass die Welle fest mit Erdpotential verbunden ist.

Durch die Einführung von statischen Erregungssystemen und statischen Kaskadenschaltungen ist eine neue Wellenspannungsquelle mit steilen Spannungsspitzen hinzugekommen. Diese steilen Spannungsspitzen beeinträchtigen die unter erschwerten Bedingungen infolge der hogen Gleitgeschwindigkeiten arbeitenden Erdungsbürsten auf der Antriebsseite -AS- der dynamoelektrischen Maschine so stark, dass sie in relative kurzer Zeit wirkungslos werden. Die steilen und hohen Spannungsspitzen führen dann zu kapazitiven Verschiebungsströmen an den Isolierstrekken der Maschinenkomponenten und zum Durchbruch der Schmierölfilme. Die von den Spannungsspitzen ausgelösten Stromimpulse können eine Funkenerosion in den Lagern des Wellenstranges verursachen.

Zur Behebung derartiger Schwierigkeiten wird in der DE-OS 35 11 755 vorgeschlagen, die auf der Antriebsseite der elektrischen Maschine angeordneten "ohmschen" Erdungsbürsten dadurch zu entlasten, dass auf der Nicht-Antriebsseite, auf welcher die Lager durch Isolierstrecken gegen Erde, Masse und Fundament galvanisch getrennt ein Strompfad, umfassend eine Kontaktvorrichtung mit mindestens einem Gleitkontakt und einer dazu in Serie geschalteten Kapazität zwischen dem Gleitkontakt der Welle und Maschinenmasse bzw. Erde vorgesehen ist.

Da jedoch die sichere ohmsche Erdung der Welle am antriebsseitigen Wellenstrangende wegen ungünstigen Kontaktverhältnissen bei konventionellen und zusätzlich wegen Unzugänglichkeit bei Kernkraftwerk-Maschinen nicht erreicht werden kann, ist bei der bekannten Anordnung die Ableitung von statischen Aufladungen und kapazitiv eingekoppelten Spannungen nicht mehr gewährleistet.

Kurze Darstellung der Erfindung

Ausgehend vom Stand der Technik liegt der Erfindung die Aufgabe zugrunde, sämtliche durch statische Erregungssysteme oder durch Fremdspannung eingekoppelten Spannungsspitzen soweit abzubauen, dass diese den Komponenten des Wellenstranges nicht gefährlich werden können, und die Welle gleichstrommässig mit Erdpotential zu verbinden, um damit einen Aufbau von elektrostatischen Ladungen in der Welle zu verhindern.

Diese Aufgabe wird bei einer Anordnung zum Reduzieren der Wellenspannungen mit den Merkmalen des Gattungsbegriffs des Anspruchs 1 erfindungsgemäss dadurch gelöst, dass auf der Nicht-Antriebsseite parallel zur Kapazität ein ohm'scher Widerstand mit einem Widerstandswert zwischen 100 und 10000 Ohm geschaltet ist.

Auf diese Weise kann grundsätzlich auf die ohmsche Erdung auf der Antriebsseite der Welle verzichtet werden. Eine zusätzliche gewollte oder ungewollte Erdung der Welle auf der AS-Seite, sei es durch Erdungsbürsten oder bei Maschinen mit einer Streifstelle an der Welle, wirkt sich nicht schädlich aus, da eventuell auftretende Kreisströme durch die RC-Kombination auf der NS-Seite auf ungefährliche Werte begrenzt werden und damit keine Schäden an den Kontaktstellen verursachen können.

Der ohmsche Widerstand - sein Widerstandswert liegt vorzugsweise zwischen 400 und 1000 Ohm - in Kombination mit einer geeignet dimensionierten Kapazität - typisch zwischen 1 und 30 Mikrofarad - schafft eine zuverlässige Verbindung zwischen Welle und Masse bzw. Erde, welche sowohl statische Aufladungen als auch niederfrequente und höherfrequente Spannungen auf für die Lager ungefährliche Beträge reduziert und eventuelle Ströme in den Lagern auf ungefährliche Werte begrenzt.

Die Erdung der Welle auf der Nicht-Antriebsseite der dynamoelecktrischen Maschine mit einer Kombination von Kapazität und ohmschem Widerstand hat gegenüber der anderen Erdung den grossen Vorteil, dass bei dieser Erdung alle jene Rahmenbedingungen realisiert werden können, welche für einen optimalen Gleitkontakt der Erdungsbürste erforderlich sind.

Der Erfindung liegt dabei die Idee zugrunde, das Kontaktproblem der Erdungsbürste von AS nach NS zu verlegen, in der Absicht, die optimalen Rahmenbedingungen für den Gleitkontakt der Erdungsbürste dort zu realisieren, nämlich kleine Gleitgeschwindigkeit, unverschnupfte Wellenoberfläche. Diese Erdung auf der isolierten Nichtantriebsseite -NS- muss dann über einen ohmschen Widerstand erfolgen, sodass im Falle eines Kontaktes auf der anderen Wellenseite des Generators oder durch zusätzliche -AS_ Erdungsbürsten keine schädlichen Ströme der induzierten niederfrequenten Wellenspannungen fliessen können. Mit einer zusätzlichen Kapazität, die parallel zum ohmschen Widerstand angeschlossen ist, wird die Wechselspannungskomponente, insbesondere die hochfrequente Komponente der Wellenspannung, auf ein so niedriges Niveau abgesenkt, dass das maximale Spannungspotential Welle-Erde unter dem Wert liegt, welcher für die Bildung eines Funkenerosionsmechanismus erforderlich ist. Ein weiterer Vorteil der Erfindung ist darin zu sehen, dass es mit vergleichsweise einfachen Mitteln möglich ist, den Erdungsbürstenkontakt und die gesamte Wellenerdung zu überwachen.Alle Komponenten der Wellenspannung und des Wellenstromes können gemessen und zur Auswertung in eine zentrale Computereinheit weitergegeben werden. Der Wellenstrom wird mittels einem auf -AS- eingebrachten Stromwandler oder vorzugsweise einer Rogowskispule auf der Welle ermittelt.

Die Analyse eines Wellenstrang-Netzwerkmodels, welches die diskreten und verteilten Kapazitäten und Induktivitäten nachbildete, wie auch Versuche an grossen Turbogruppen zeigten, dass diese Erdung auf der isolierten Nichtantriebsseite des Generators ihre Aufgabe in hervorragender Weise erfüllt.

Kurze Beschreibung der Zeichnung

Die Erfindung wird nachstehend anhand der Zeichnung näher erläutert. Es zeigen:

Fig. 1    eine stark schematisierte Darstellung einer Turbogruppe mit einer Einrichtung zur Wellenerdung.

Fig. 2    ein Blockschaltbild einer Auswerteeinrichtung für die am nichtantriebsseitigen Wellenende zur Erde abfliessenden Ströme bzw. dort auftretenden Spannungen.

Detaillierte Beschreibung der Erfindung und deren Grundlagen

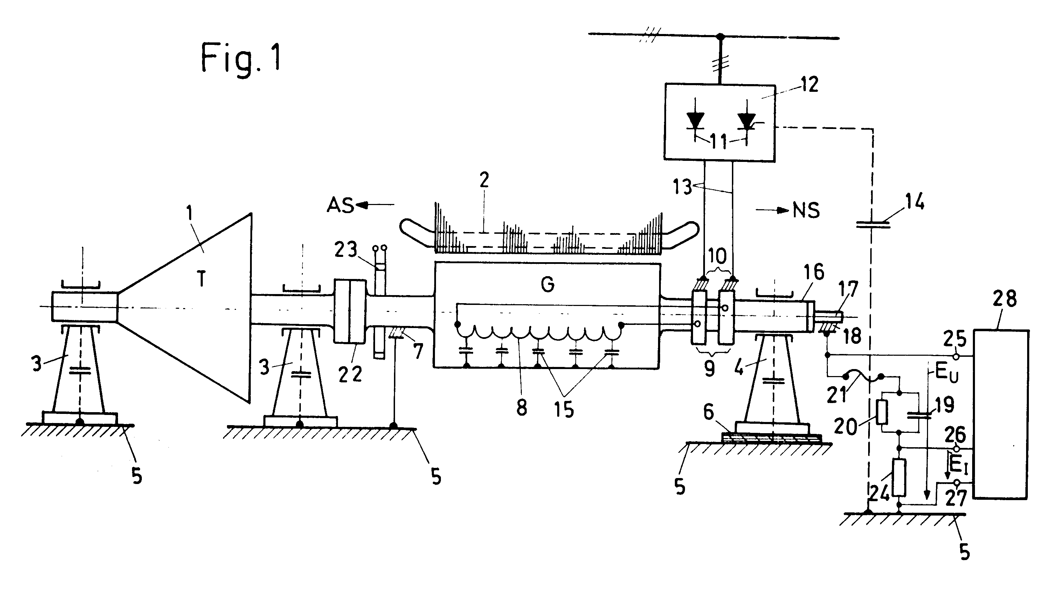

In Fig. 1 ist eine Turbogruppe mit einer Turbine 1 und einem Generator 2 dargestellt. Anstelle des Generators 2 ist jedoch auch eine andere elektrische Maschine, z.B. ein Schleifringläufer-Asynchronmotor, und anstelle der Turbine 1 eine beliebige angetriebene Arbeitsmaschine denkbar. Mit 3 sind die auf der Antriebsseite (AS) gelegenen und gegenüber Erde 5 (Masse) nicht isolierten Lager des Wellenstranges bezeichnet, 4 ist das auf der Nicht-Antriebsseite (NS) gelegene und über eine Lagerisolation 6 gegen Erde 5 isolierte Lager. Auf AS ist der Wellenstrang über eine Erdungsbürste 7 ohmisch geerdet. Die Rotorwicklung 8 wird über Schleifringe 9 und Stromabnahmebürsten 10 aus dem statischen, d.h. lmit Halbleiterventilen 11 (nur symbolisch dargestellt) ausgerüsteten Speisesystem 12 über Zuleitungen 13 angespeist. Bei der Kommuntierung der Halbleiterventile 11 entstehen im Speisesystem 12 steile dU/dt-Flanken, die entweder durch kapazitive Koppelung, über Erdkapazitäten 14 des Speisesystems und verteilten Wicklungskapazitäten 15 der Rotorwicklung Wellenspannungsspitzen verursachen, oder aber rasche di/dt-Aenderungen auslösen, die über induktive Koppelmechanismen ebenfalls zu diesen Wellenspannungen führen.

Erfindungsgemäss ist auf der NS-Seite bzw. jenem Wellenende 16, an welchem die Lager (Dichtringe usw.) über die Isolierstrecken 6 gegen Erde 5 isoliert sind, eine zusätzliche Erdung vorgesehen, die aus einem Gleitkontakt mit einem rotierenden Kontaktteil an einem Wellenzapfen 17 und einem feststehenden Kontakt, z.B. Bürsten 18, einem Kondensator 19 und einem parallel hierzu geschalteten ohm'schen Widerstand 20 besteht. Eine in Serie zu dem RC-Glied 19,20 geschaltete Sicherung 21 hat die Aufgabe, bei einem Isolationsdefekt des ohm'schen Widerstandes oder der Kapazität den Fluss von Strömen zu verhindern, welche in diesem Fall von niederfrequenten Längsspannungen getrieben würden. Hierzu werden vorzugsweise träge Sicherungen für möglichst kleine Abschaltströme eingesetzt, die jedoch auf die sehr kurzzeitigen kapazitiven Ableitströme nicht ansprechen. Für die Auslegung des Kondensators 19 und des ohm'schen Widerstandes 20 gelten folgende Kriterien:

Einerseits soll diese Erdung eine möglichst niedrige Impedanz zur Ableitung der steilen Spannungsspitzen haben, andererseits soll der durch niederfrequente Wellenspannungskomponenten (Drehfrequenz und Oberwellen) verursachte Strom bei einem auf der anderen Seite -AS- vorhandenen Kontakt klein sein. Widerstandswerte zwischen 400 und 1000 Ohm und Kapazitätswerte zwischen 1 und 30 Mikrofarad haben sich dabei als besonders zweckmässig erwiesen.

Für den Gleitkontakt im NS-seitigen Ableitkreis müssen folgende Anforderungen erfüllt sein:

- Eine kleine Gleitgeschwindigkeit, was z.B. durch einen Wellenzapfen 17, dessen Durchmesser kleiner ist als derjenige der Welle, erreicht werden kann;
- eine für die Ableitung kurzer Stromimpulse günstig strukturierte Oberfläche des rotierenden Kontaktteiles, z.B . durch Strukturierung der Zapfenoberfläche, vorzugsweise nach Fig. 5 der DE-OS 35 11 755;
- Bürsten mit gleichbleibenden mechanischen und elektrischen Eigenschaften, z.B. solche aus metallisierten Carbonfibern oder Metall, die entweder radial oder axial am Wellenzapfen 17 aufliegen.

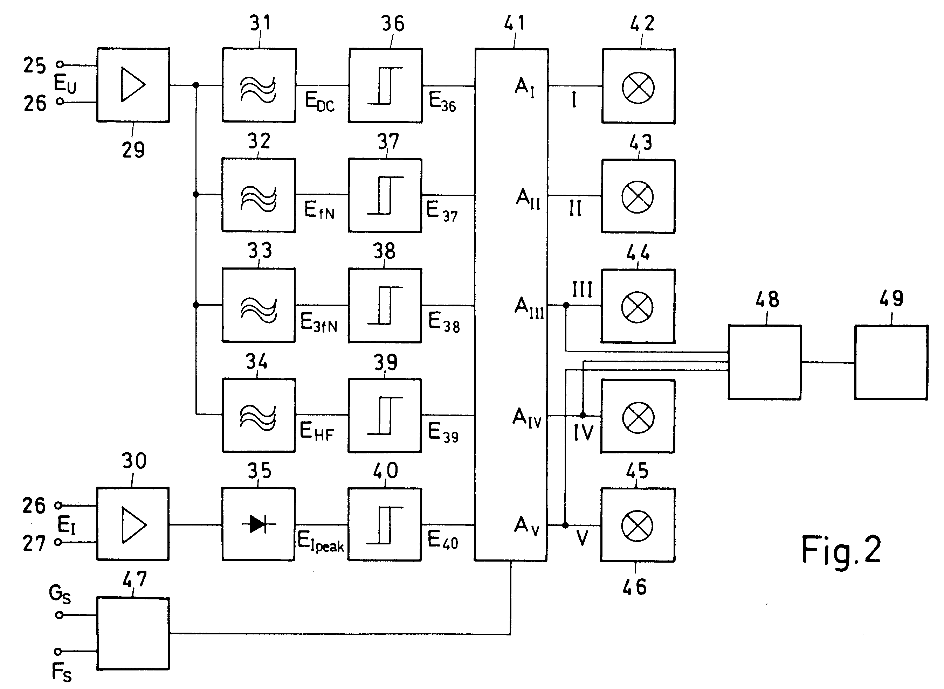

In Serie zum RC-Glied 19,20 liegt ferner ein induktivitätsarmer Messwiderstand (Shunt) 24 zur Erfassung des gesamten Wellenableitstromes, der von der NS-Seite zur Erde fliesst. Ueber Klemmen 25,26 und 27, die unmittelbar an die Bürsten 18, den Verbindungspunkt zwischen RC-Glied 20,19 und Messwiderstand 24 bzw. Masse (Fundament 5) führen, ist eine Auswerteeinheit 28 angeschlossen, deren Aufbau aus Fig. 2 hervorgeht.

Ein die Welle zwischen AS-Erdungsbürste 7 und Kupplung 22 umgebender Stromwandler, vorzugsweise eine Rogowski-Spule 23, dient gleichfalls der Erfassung des Wellenstroms und kann einer Ueberwachungsrichtung zugeleitet werden.

Dem Eingang der Auswerteeinheit 28, deren Blockschaltbild Fig. 2 zeigt, werden die am RC-Glied 20,19 bzw. am Shunt 24 anstehenden Signale $E_{11}$ und $E_1$ zugeführt. Beide Signale werden in Verstärkern 29,30 breitbandig verstärkt. Das Ausgangssignal des Verstärkers 29 wird Filtern 31,32,33,34 zugeführt. Diese Filter sind derart aufgebaut, dass am Filter 31 die Gleichkomponente $E_{DC}$, am Filter 32 die netzfrequente Komponente $E_{FN}$, am Filter 33 die der dreifachen Netzfrequenz entsprechende Komponente $E_{3FN}$ und am Filter 34 die der oberhalb der dreifachen Netzfrequenz für die Beurteilung des Erdungszustandes signifikante Komponente $E_{HF}$ ausgefiltert werden.

Dem Verstärker 30 ist ein Spitzenwert-Gleichrichter (peak value detector) 35 nachgeschaltet, an dessen Ausgang ein dem Scheitelwert des durch den Messwiderstand 24 fliessenden Stromes entsprechendes Signal $E_{Ipeak}$ ansteht.

Die Ausgangssignale aller Filter 31-34 und des Spitzenwert-Gleichrichters 35 werden Spannungskomparatoren 36-40 mit einstellbarer Ansprechschwelle zugeleitet. Auf diese Weise lässt sich eine amplitudenmässige Bewertung der verschiedenen Komponenten erzielen, bevor die Komponenten weiter ausgewertet bzw. miteinander verknüpft werden. Dies vollzieht sich in einer Auswertelogik 41, auf die später eingegangen wird. Zur Signalisierung aller relevanter Betriebszustände der Wellenerdung dienen Aufgabeeinheiten 42 bis 46.

Um zu verhindern, dass beim Anfahren oder Abschalten der Turbogruppe Fehlinformationen an die Ausgabeeinheiten signalisiert werden, ist eine elektrische Verriegelung 47 vorgesehen, die vom Generatorhauptschalter und/oder vom Generatorfeldschalter (beide nicht in der Zeichnung dargestellt) über Eingangssignale GS bzw. FS aktiviert wird. Das Ausgangssignal der Verriegelung 47 wirkt auf Steuer- oder Verriegelungseingänge der Auswertelogik 41 und blockiert deren Signalauswertung bzw. -weiterleitung während der genannten Betriebsphasen.

Zur Erläuterung der Wirkungsweise der Auswerteeinheit 28 sei zunächst die nachstehende Tabelle 1 näher betrachtet. In ihr sind die verschiedenen Spannungs- und Stromkomponenten, die auf der nichtantriebsseitigen Wellenerdung bei einem grossen Turbogenerator mit rotierender Gleichrichtererregung und bei verschiedenen Varianten der Wellenerdung gemessen wurden, zusammengestellt.

Tabelle 1

| Art der Erdung | Spannung (V) | | | | Strom (A) $I_{peak}$ |
|---|---|---|---|---|---|
| | $U_{DC}$ | $U_{fN}$ | $U_{3fN}$ | $U_{HF}$ | |
| A | 0,05 | 2,25 | 4,25 | 0,4 | 2,5 |
| B | 4,8 | 1 | 1 | 0,4 | 2,6 |
| C | 0,75 | 2,4 | 4,3 | 18 | - |
| D | 26 | 6,2 | 8,6 | 18 | - |

In der Tabelle bedeuten

A - Wellenerdung auf AS- und NS-Seite

B - Wellenerdung nur auf NS-Seite

C - Wellenerdung nur auf AS-Seite

D - Welle ungeerdet

$U_{DC}$ - Gleichspannungskomponente

$U_{fN}$ - netzfrequente Komponente

$U_{3fN}$ - Komponente der 3. Harmonischen der Netzfrequenz

$U_{HF}$ - Hochfrequente Komponente

$I_{peak}$ - Spitzenwert des NS-Erdungsstromes

Bereits ein näherer Blick auf diese Tabellenwerte lässt erkennen, dass bei entsprechender Bewertung und Verknüpfung dieser Messwerte eindeutige Aussagen über die gesamte Erdungsverhältnisse der elektrischen Maschine gemacht werden können. In der Auswerteeinheit 28 stehen nämlich diese Signale - entsprechend verstärkt - an den Ausgängen der Filter 31 bis 34 bzw. am Ausgang des Spitzenwert-Gleichrichters 35 zur Verfügung. In den nachgeschalteten Komparatoren 36 bis 40 werden amplitudenmässig verwertet. Diese Bewertung erfolgt in aller Regel aufgrund theoretischer Berechnungen und in der Praxis erworbener Erfahrungswerte. Bei dem Turbogenerator, dessen Messwerte die Tabelle 1 wiedergibt, seien diese Schwellwerte beispielsweise

$U_{DC}$ = 2,0 V (rms)

$U_{fN}$ = 1,5 V (rms)

$U_{3fN}$ = 2,0 V (rms)

$U_{HF}$ = 5,0 V (peak)

$I_{peak}$ = 0,5 A (peak)

Werden nun die Komparatoren 36 bis 40 dergestalt eingestellt, dass sie ein (logisches) Ausgangssignal O abgegeben, solange diese Werte unterhalb des Schwellwertes bleiben und ein (logisches) Ausgangssignal 1 beim Ueberschreiten besagter Schwellwerte abgeben, so können diese in einfacher Weise in der vergleichsweise einfach aufgebauten Auswertelogik 41 miteinander verknüpft und ausgewertet werden. Dies soll anhand der Tabelle 2 aufgezeigt werden.

Tabelle 2

| Erdungszustand | | | | | | Bewertetes Messignal | | | | Zustand |
|---|---|---|---|---|---|---|---|---|---|---|
| Erdungsbürste | | Sicherung | | | | Spannung | | | Strom | |
| NS | | AS | | NS | | $E_{36}$ | $E_{37}$ | $E_{38}$ | $E_{40}$ | |
| ok | def. | ok | def. | ok | def. | | | | | |
| x | | x | | x | | 0 | 1 | 1 | 1 | I |
| x | | | x | x | | 1 | 0 | 0 | 1 | II |
| x | | x | | | x | 0 | 1 | 1 | 0 | III |
| x | | | x | | x | 1 | 1 | 1 | 0 | IV |
| | x | x | | | x | 0 | 0 | 0 | 0 | V |

In dieser Tabelle bedeuten $E_{36}$, $E_{37}$, $E_{38}$, und $E_{40}$ die Ausgangssignale der Komparatoren 36, 37, 38 und 40. Die Binärkombination 0111 repräsentiert den Zustand I, d.h. der Kontakt von beiden Erdungsbür-

EP 0 271 678 B1

sten auf NS und AS ist in Ordnung, die Sicherung 21 ebenfalls. Die Binärkombination 1001 (Zustand II) signalisiert, dass die Erdungsbürste auf AS defekt ist, die Wellenerdung auf NS aber in Ordnung ist. Die Binärkombination 0110, Zustand III signalisiert einen Defekt der Sicherung 21, aber intakte Erdungsverhältnisse auf AS und NS. Die Binärkombination 1110 signalisiert eine intakte Erdungsbürste auf NS, aber defekte Erdung auf AS und eine ebensolche Sicherung 21. Die Binärkombination 0000 schliesslich zeigt einen Ausfall der Erdungsbürste auf NS an.

Aufgabe der Auswertelogik, die mit Mitteln des Standes der Technik einfach zu realisieren ist, ist es, diese fünf Zustände zu erkennen und an die Ausgabeeinheiten 42 bis 46 weiterzuleiten.

Von den Ausgängen $A_I$ bis $A_V$ sind im Beispielsfall nur die Ausgänge $A_{III}$, $A_{IV}$ und $A_V$ über eine Datenübertragungseinrichtung 48, z.B. ein Modem, mit der Maschinenzentrale 49 verbunden, weil nur die Zustände III, IV und V für die Wellenerdung kritisch sind, es können jedoch alle Zustände an die Zentrale weitergeleitet werden.

**Patentansprüche**

1. Amordnung zur Reduzierung der Wellenspannungen an dynamoelektrischen Maschinen, insbesondere Turbogruppen, bei welchen Maschinen am nicht-antriebsseitigen Wellenende (NS) der Maschine, deren Welle durch Isolierstrecken (6) gegen Erde, Masse oder Fundament galvanisch getrennt ist, ein Strompfad, umfassend eine Kontaktvorrichtung und eine hierzu in Serie geschaltete Kapazität (19) zwischen Welle und Maschinenmasse bzw. Erde vorgesehen ist, dadurch gekennzeichnet, dass auf der Nicht-Antriebsseite (NS) parallel zur genannten Kapazität (19) ein ohmscher Widerstand (20) mit einem Widerstandswert zwischen 100 und 10000 Ohm geschaltet ist.

2. Anordnung nach Anspruch 1, dadurch gekennzeichnet, dass der Widerstandswert des ohmschen Widerstandes (20) vorzugsweise zwischen 400 und 1000 Ohm, die Kapazität des Kondensators (19) zwischen 1 und 30 Miktrofarad beträgt und innerhalb dieser Grenzen so bemessen ist, dass ein durch die Wellenerdung auf der Antriebsseite (AS) aus der Generator-Längsspannung gebildeter Kreisstrom durch die Serienkombination Kontaktrichtung, RC-Glied (19,20) auf einen unschädlichen Betrag begrenzt wird.

3. Anordnung nach Anspruch 1 oder 2, dadurch gekennzeichnet, dass in den Strompfad seriell ein Sicherungselement (21), vorzugsweise eine träge Schmelzsicherung mit kleinem Ansprechstrom, eingeschaltet ist.

4. Anordnung nach einem der Ansprüche 1 bis 3, dadurch gekennzeichnet, dass am antriebsseitigen Wellenende (AS) der elektrischen Maschine zusätzlich eine ohmsche Erdung (7) vorgesehen ist.

5. Anordnung nach einem der Ansprüche 1 bis 4, dadurch gekennzeichnet, dass zur Erfassung des Wellenstroms ein Stromwandler, vorzugsweise eine Rogowski-Spule (23) auf der Welle, vorzugsweise auf der Antriebsseite (AS), der Maschine vorgesehen ist.

6. Anordnung nach einem der Ansprüche 4 bis 5, dadurch gekennzeichnet, dass der Strompfad auf der Nicht-Antriebsseite (NS) mit einer Auswerteeinrichtung (28) zur Ueberwachung der Funktionssicherheit und Funktiontüchtigkeit der Wellenerdung vorgesehen ist.

7. Anordnung nach Anspruch 6, dadurch gekennzeichnet, dass der Auswerteeinheit (28) ein erstes Signal ($E_U$), das zwischen Erdungsbürste (18) und Erde (5) auftritt und eine zweites Signal ($E_I$), das den gesamten auf der NS-Seite der elektrischen Maschine über die Erdungsbürste (18) fliessenden Erdungsstrom abbildet, zugeführt wird.

8. Anordnunge nach Anspruch 7, dadurch gekennzeichnet, dass zur Abbildung des besagten Erdungsstromes ein induktivitätsarmer Messwiderstand (24) im Strompfad der NS-Seite liegt.

9. Anordnung nach Anspruch 7, dadurch gekennzeichnet, dass die Signale ($E_U$,$E_I$) einer Filteranordnung (31 - 34) mit nach geschalteten Komparatoren (36 - 39), einer Auswertelogik (41) und Ausgabeeinheiten (42 - 46) zugeführt werden.

10. Anordnung nach Anspruch 9, dadurch gekennzeichnet, dass das erste Signal ($E_U$) nach vorgängiger

6

breitbandiger Verstärkung in einem Verstärker (29) in maschinentypische Frequenzkomponenten ($E_{DC}$, $E_{fN}$, $E_{3fN}$, $E_{HF}$) zerlegt wird, der Spitzenwert ($E_{Ipeak}$) des zweiten Signals ($E_I$) erfasst und anschliessend jeder dieser Werte für sich mit einem Referenzwert verglichen und anschliessend in der Auswertelogik (41) ausgewertet werden.

11. Anordnung nach Anspruch 10, dadurch gekennzeichnet, dass ein erster Filter (31) Tiefpass-Charakteristik aufweist und als Ausgangssignal die Gleichstromkomponente ($E_{DC}$),ein zweiter Filter (32) ein auf die Netzfrequenz, ein dritter Filter (33) ein auf die dreifache Netzfrequenz abgestimmter Bandpassfilter ist, und dass ein vierter Filter (34) zur Ausfilterung der höherfrequenten Komponenten ($E_{HF}$) vorgesehen ist.

12. Anordnung nach einem der Ansprüche 9 bis 11, dadurch gekennzeichnet, dass Mittel (47) zur Verriegelung der Auswertung beim Anfahren und Abschalten der elektrischen Maschine (2) vorgesehen sind.

13. Anordnung nach einem der Ansprüche 6 bis 12,dadurch gekennzeichnet, dass die für die Wellenerdung typischen Mess- und Ueberwachungswerte über eine Datenübertragungseinrichtung (48) an eine Zentrale (49) weitergeleitet werden.

**Claims**

1. Arrangement for reducing the shaft voltages of dynamoelectric machines, particularly turbine-generator units, in which machines a current path comprising a contact device and a series-connected capacitance (19) is provided between shaft and machine frame or earth at the non-drive end (N-end) of the shaft of the machine, the shaft of which is electrically isolated with respect to earth, frame or foundation by means of insulating clearances (6), characterised in that an ohmic resistor (20) with a resistance value between 100 and 10,000 (sic) Ohms is connected in parallel with the said capacitance (19) at the non-drive end (N-end).

2. Arrangement according to Claim 1, characterised in that the resistance value of the ohmic resistor (20) is preferably between 400 and 1000 Ohms, the capacitance of the capacitor (19) is between 1 and 30 microfarad and is dimensioned within these limits in such a manner that a circulating current formed from the longitudinal generator voltage due to the shaft earthing at the drive end (D-end) is limited to a harmless amount by the series combination of contact device, RC section (19, 20).

3. Arrangement according to Claim 1 or 2, characterised in that a fuse element (21), preferably a slow-blow fusable link with a low threshold current is inserted serially into the current path.

4. Arrangement according to one of Claims 1 to 3, characterised in that an ohmic earthing (7) is additionally provided at the drive end (D-end) of the shaft of the electric machine.

5. Arrangement according to one of Claims 1 to 4, characterised in that a current transformer, preferably a Rogowski coil (23) is provided on the shaft, preferably at the drive end (D-end) of the machine for detecting the shaft current.

6. Arrangement according to one of Claims 4 and 5, characterised in that the current path at the non-drive end (N-end) is provided with an evaluating device (28) for monitoring the functional reliability and operability of the shaft earthing.

7. Arrangement according to Claim 6, characterised in that the evaluating unit (28) is supplied with a first signal ($E_U$) which occurs between earthing brush (18) and earth (5) and with a second signal ($E_I$) which represents the entire earthing current flowing via the earthing brush (18) at the N-end of the electric machine.

8. Arrangement according to Claim 7, characterised in that a low-inductance sensing resistor (24) is located in the current path of the N-end for representing the said earthing current.

9. Arrangement according to Claim 7, characterised in that the signals ($E_U$, $E_I$) are supplied to a filter arrangement (31-34) with subsequent comparators (36-39), an evaluating logic (41) and output units (42-46).

10. Arrangement according to Claim 9, characterised in that the first signal ($E_U$), after a preceding wideband amplification in an amplifier (29), is split into machine-typical frequency components ($E_{DC}$, $E_{fN}$, $E_{3fN}$, $E_{HF}$) the peak value ($E_{Ipeak}$) of the second signal ($E_I$) is detected and subsequently each of these values is separately compared with a reference value and then evaluated in the evaluating logic (41).

11. Arrangement according to Claim 10, characterised in that a first filter (31) has a low-pass characteristic and the direct-current component ($E_{DC}$) as output signal, a second filter (32) is a band-pass filter tuned to the mains frequency, a third filter (33) is a band-pass filter tuned to three times the mains frequency, and in that a fourth filter (34) is provided for filtering out the higher-frequency components ($E_{HF}$).

12. Arrangement according to one of Claims 9 to 11, characterised in that means (47) for interlocking the evaluation during the start-up and disconnection of the electric machine (2) are provided.

13. Arrangement according to one of Claims 6 to 12, characterised in that the measurement and monitoring values typical of the shaft earthing are forwarded via a data transmission device (48) to a control centre (49).

**Revendications**

1. Dispositif pour réduire les tensions d'arbre dans des machines dynamo-électriques, en particulier des turbogroupes, machines dans lesquelles il est prévu, à l'extrémité de l'arbre située à l'opposé de la commande (NS) dans la machine où l'arbre est galvaniquement séparé de la terre, de la masse ou de la fondation par des zones isolantes (6), un chemin de courant comportant un dispositif de contact et une capacité (19) montée en série avec celui-ci entre l'arbre et la masse, respectivement la terre, de la machine, caractérisé en ce qu'une résistance ohmique (20) avec une valeur de résistance comprise entre 100 et 10000 ohm est montée en parallèle avec ladite capacité (19) du côté opposé à la commande (NS).

2. Dispositif suivant la revendication 1, caractérisé en ce que la valeur de résistance de la résistance ohmique (20) est de préférence comprise entre 400 et 1000 ohm et la valeur de la capacité (19) entre 1 et 30 microfarad, et sont déterminées, à l'intérieur de ces limites, de telle manière qu'un courant de fuite formé dans la prise de terre de l'arbre du côté de la commande (AS) à partir de la tension longitudinale du générateur soit limité à une valeur inoffensive par la combinaison en série dispositif de contactensemble R, C (19, 20).

3. Dispositif suivant la revendication 1, caractérisé en ce qu'un élément de sécurité (21), de préférence un fusible à fusion retardée avec un faible courant de réponse, est monté en série dans le chemin de courant.

4. Dispositif suivant l'une ou l'autre des revendications 1 à 3, caractérisé en ce qu'à l'extrémité de l'arbre située du côté de la commande (AS) de la machine électrique, il est prévu une prise de terre ohmique supplémentaire (7).

5. Dispositif suivant l'une ou l'autre des revendications 1 à 4, caractérisé en ce que, pour déterminer le courant d'arbre, il est prévu un convertisseur de courant, de préférence une bobine de Rogowski (23) sur l'arbre, de préférence du côté de la commande (AS) de la machine.

6. Dispositif suivant l'une ou l'autre des revendications 4 à 5, caractérisé en ce que le chemin de courant du côté opposé à la commande (NS) est pourvu d'un dispositif d'évaluation (28) pour la surveillance de la sécurité de fonctionnement et de l'effica-cité de fonctionnement de la prise de terre de l'arbre.

7. Dispositif suivant la revendication 6, caractérisé en ce que l'unité d'évaluation (28) reçoit un premier signal ($E_U$), qui apparaît entre le balai de prise de terre (18) et la terre (5), et un second signal ($E_I$) qui représente le courant de terre total circulant dans le balai de prise de terre (18) du côté NS de la machine électrique.

**8.** Dispositif suivant la revendication 7, caractérisé en ce qu'une résistance de mesure (24) à faible inductivité est montée dans le chemin de courant du côté NS pour représenter ledit courant de terre.

**9.** Dispositif suivant la revendication 7, caractérisé en ce que les signaux ($E_U$, $E_I$) sont introduits dans un dispositif de filtrage (31 - 34) suivi de comparateurs (36 - 39), d'une unité logique d'évaluation (41) et d'unités de sortie (42 - 46).

**10.** Dispositif suivant la revendication 9, caractérisé en ce que le premier signal ($E_U$) est, après amplification préalable en large bande dans un amplificateur (29), décomposé en des composantes de fréquence typiques de la machine ($E_{DC}$, $E_{fN}$, $E_{3fN}$, $E_{HF}$), la valeur de crête ($E_{Ipeak}$) du second signal ($E_I$) est déterminée et ensuite chacune de ces valeurs est comparée individuellement avec une valeur de référence et ensuite exploitée dans l'unité logique d'évaluation (41).

**11.** Dispositif suivant la revendication 10, caractérisé en ce qu'un premier filtre (31) présente une caractéristique passe-bas et a comme signal de sortie la composante de courant continu ($E_{DC}$), un deuxième filtre (32) est un filtre à bande passante ajustée à la fréquence du réseau, un troisième filtre (33) est un filtre à bande passante ajustée à trois fois la fréquence du réseau, et en ce qu'il est prévu un quatrième filtre (34) pour le filtrage des composantes de fréquences plus élevées ($E_{HF}$).

**12.** Dispositif suivant l'une ou l'autre des revendications 9 à 11, caractérisé en ce qu'il est prévu des moyens (47) pour verrouil-ler l'évaluation lors du démarrage et de l'arrêt de la machine électrique (2).

**13.** Dispositif suivant l'une ou l'autre des revendications 6 à 12, caractérisé en ce que les valeurs typiques de mesure et de surveillance de la mise à la terre de l'arbre sont transmises à une unité centrale (49) par un dispositif de transmission de données (48).

Fig. 1

Fig.2

EP 0 271 678 B1